# EUROPEAN PATENT APPLICATION

(11) **EP 4 640 065 A1**
(43) Date of publication of application: **29.10.2025**
(21) Application number: 24464004.1
(22) Date of filing: 22.04.2024
(51) Int. Cl.: A23C 19/068, A23C 19/076, A23C 19/09, A23C 21/00, A23G 1/54, A23G 1/46, A23G 1/48, A23C 21/06

(54) **URDA CHEESE BAR WITH CRANBERRIES, PSEUDOCEREALS, AND CHOCOLATE AND METHOD FOR OBTAINING IT**

(71) Applicant: Stefan cel Mare University of Suceava, 720229 Suceava, County Suceava (RO)
(72) Inventor: Paduret, Sergiu, Suceava (RO); Oroian Mircea, Adrian, Suceava (RO)

(57) **Abstract**

**Summary:** The invention relates to a refrigerated dairy product in the form of a urda cheese bar with a cranberry filling, supported by a base of expanded pseudocereals, all covered in a chocolate crust, and to a method of obtaining it. The production of the urda cheese bar, according to the invention, involves homogenizing and aerating the sweet urda cheese cream from cow's milk whey, followed by dosing it together with the cranberry filling into the molds where a thin layer of tempered chocolate and expanded pseudocereals mixture has been previously distributed. In the final stage, the molds undergo ultra-rapid freezing, followed by unmolding, dividing, and glazing the bars with tempered chocolate.

## Description

The invention refers to a refrigerated dairy dessert product in the form of a urda cheese bar with a cranberry filling, supported by a pseudocereal base, all wrapped in a chocolate coating, as well as a method for obtaining it.

This category of refrigerated dairy dessert products contains ingredients such as milk' cream, fresh cow cheese, caramel, nuts, egg, wheat flour, starch, or a mixture thereof, to which emulsifiers, sweeteners, and preservatives are added. Products from the refrigerated dessert category such as 'Kinder' (Ferrero S.p.A., Alba, Piedmont, Italy) are known, as well as bars based on fresh cow cheese (Sole Mizo Zrt, Marcali, Hungary). For the same purpose, RO137213 A2 [1], RO134426 A0 [2], and RO134673 A0 [3] are known, which refer to compositions and methods for obtaining bars based on sprouted sorrel, nuts, almonds, honey, bee bread, egg, dried fruits, as well as RO137375 A2 [4] which refers to the process of obtaining a functional product based on urda cheese and dried plums. The disadvantages are represented by the fact that these products have low nutritional value and contain ingredients/substances (such as nuts, gluten, and egg proteins) that can cause severe allergies [5, 6].

The process, according to the invention eliminates these disadvantages and expands the range of refrigerated dairy dessert products in that urda cheese has high nutritional value due to its high-quality proteins with high biological value (e.g. β-lactoglobulin, α-lactalbumin, bovine serum albumin, immunoglobulins, lactoferrin), as well as minerals (e.g. calcium, zinc, magnesium, phosphorus, copper, sodium, potassium, iron) and B-complex vitamins. Urda cheese is easily digestible and has the ability to promote and maintain muscle mass health [7]. The proteins in urda cheese contain essential and non-essential amino acids in high concentrations compared to plant protein sources. Additionally, urda cheese proteins are an excellent source of essential branched-chain amino acids (leucine, isoleucine, and valine), which are particularly useful for athletes and for sarcopenic conditions, being important in the diet of elderly individuals [8]. Pseudocereals do not contain gluten, they are excellent sources of high-quality proteins, fibers, and minerals, also containing bioactive compounds that promote human health. Together with chocolate and cranberries, they confer unique sensory and textural properties to the product. Pseudocereals do not contain gluten, they are excellent sources of proteins with high biological value, fibers, and minerals, also containing bioactive factors that promote human health [9] and together with chocolate and cranberries, give the product unique sensory and textural properties.

The technical problem solved by the invention consists of obtaining an urda cheese bar from cow's milk whey, which is a byproduct in cheese-making technology, with cranberries, pseudocereals, and chocolate, containing high-quality proteins that include essential, non-essential, and branched-chain amino acids, with a fiber-rich base, proteins, vitamins, minerals, gluten-free, with high nutritional and biological value, and bioactive compounds that promote human health.

The bar based on urda cheese, cranberries, pseudocereals, and chocolate, according to the invention, is composed of 60% aerated urda cheese cream with carbon dioxide and nitrogen obtained from 86% sweet urda cheese from cow's milk whey, 6% pasteurized cream, 4% water, 2% stabilizer - gelatin, 1.2% sugar, 0.8% lemon juice; 27% chocolate; 10% cranberry filling, obtained by heat treatment of cranberries with 15% sugar and 1.5% pectin; 1% expanded buckwheat; 1% expanded quinoa; 1% expanded amaranth.

The process of obtaining the bar based on urda cheese, cranberries, pseudocereals, and chocolate, according to the invention, consists of homogenizing the sweet urda cheese with pasteurized cream, sugar, and lemon juice, followed by incorporating hydrated gelatin in cold water for 10-20 minutes and melted; the resulting homogeneous mass is transferred into the aeration sealed container where is dosed in equal proportions carbon dioxide and nitrogen up to 3-5 bars and subjected to agitation for 2-5 minutes; 20-30% of the quantity of chocolate is tempered, mixed with expanded pseudocereals (buckwheat, quinoa, amaranth), and distributed in a thin layer (4-6 mm) in molds, over which the aerated urda cheese cream with nitrogen and carbon dioxide is dosed from the aeration sealed container, followed by dosing the cranberry filling and brought to the superior mold level with the aerated urda cheese cream; in the final stage, the molds are subjected to ultra-rapid freezing; after solidification, the bars are unmolded, divided, and glazed with tempered chocolate.

The application of the invention presents several advantages:
- obtaining a refrigerated dessert-type dairy product with high-quality proteins, high biological value, fibers, minerals, and bioactive compounds that promote human health;
- using whey urda cheese from cow's milk as the main raw material leads to obtaining a nutritionally complex product that provides a significant contribution of essential and non-essential amino acids, as well as essential branched-chain amino acids such as leucine, isoleucine, or valine;

- the carbon dioxide and nitrogen used in aerating the urda cream create a unique, airy texture that will delight consumers, maintain the freshness, aroma, and flavor of the fresh urda cheese, and at the same time improve the product's safety and extend its shelf life by limiting the growth of aerobic microorganisms and the oxidation of nutrients.
- amaranth, buckwheat, and quinoa belong to the category of pseudocereals with high nutritional value, as they do not contain gluten, making the product suitable for consumption by individuals who have an intolerance to this allergen.

An example of implementing the invention is further provided.

### Example:

To obtain 100 kg of urda cheese bars with cranberries, pseudocereals, and chocolate, the following raw and auxiliary materials are required: 51.60 kg sweet urda cheese from cow's whey, 27 kg dark chocolate, 8.35 kg cranberries, 3.60 kg pasteurized cream with 30-32% fat, 2.40 kg water, 2.22 kg sugar, 1.20 kg gelatin, 1 kg expanded buckwheat, 1 kg expanded quinoa, 1 kg expanded amaranth, 0.48 kg lemon juice, 0.15 kg pectin. In the first phase, gelatin is coldly hydrated (6-8°C) for 10-20 minutes, then urda cheese, cream, lemon juice, and some of the sugar (0.72 kg) are dosed into a planetary mixer and homogenized; finally, hydrated and melted gelatin is incorporated. The obtained homogenized mixture is transferred to the aeration equipment's sealed container where carbon dioxide and nitrogen are dosed in equal proportions, to a pressure of 3-5 bars, and agitated for 2-5 minutes. Concurrently with these steps, 5.4-8.1 kg of tempered chocolate at 32°C is mixed with 1 kg expanded buckwheat, 1 kg expanded quinoa, and 1 kg expanded amaranth, and distributed in a 4-6 mm layer at the base of molds measuring 25 mm in height, 25 mm in width, and 500 mm in length, over which the aerated urda cheese cream with carbon dioxide and nitrogen is dosed from the sealed aeration container to half the height of the mold, followed by dosing the cranberry filling and brought to the superior mold level with aerated urda cheese cream. The necessary cranberry filling is obtained by heat treating 8.35 kg cranberries with 1.5 kg sugar and 0.15 kg pectin. Finally, the molds undergo ultra-rapid freezing at -40 ± 3°C for 25-35 minutes, followed by unmolding, dividing the bars, and glazing them with tempered chocolate; packaging is done in polypropylene film and cardboard boxes, and the product storage temperature is 4-8°C.

## Claims

1. Urda cheese bar with cranberries, pseudocereals, and chocolate, **characterized by the fact that** is made of 60% urda cheese cream (obtained from 86% sweet urda cheese from cow's whey, 6% pasteurized cream, 4% water, 2% stabilizer - gelatin, 1.2% sugar, 0.8% lemon juice), 27% chocolate, 10% cranberry filling, 1% expanded buckwheat, 1% expanded quinoa, and 1% expanded amaranth.

2. Method for obtaining the urda cheese bar with cranberries, pseudocereals, and chocolate as defined in claim 1, **characterized by the fact that** the resulting mass obtained by homogenizing sweet urda cheese from cow's milk whey with pasteurized cream, sugar, lemon juice, gelatin hydrated in cold water for 10-20 minutes, and melted is transferred into the aeration sealed container where carbon dioxide and nitrogen are dosed in equal proportions, agitated for 2-5 minutes, and distributed to half the height of the mold over the 4-6 mm base, consisting of expanded pseudocereals and chocolate, followed by dosing the cranberry filling and brought to the superior mold level with urda cheese cream aerated with carbon dioxide and nitrogen; in the final stage, the molds undergo ultra-rapid freezing, followed by unmolding, dividing, and glazing the bars with tempered chocolate.
